# EUROPÄISCHE PATENTANMELDUNG

(11) **EP 2 196 608 A2**
(43) Veröffentlichungstag der Anmeldung: **16.06.2010**
(21) Anmeldenummer: 09173710.6
(22) Anmeldetag: 22.10.2009
(51) Int. Cl.: E05D 9/00, E05D 3/02

(54) **Verfahren zur Herstellung von zu Scharnieren zusammensetzbaren Scharnierteilen**

(30) Priorität: 11.12.2008 DE 102008061895
(71) Anmelder: Automobilscharniere Hasten GMBH + CO. KG, 42855 Remscheid (DE)
(72) Erfinder: Morawetz, Richard, 42289, Wuppertal (DE); Meyer, Thomas, 44859, Remscheid (DE); Sommer, Bernd, 42857, Remscheid (DE)
(74) Vertreter: Christophersen, Ulrich Rudolf

(57) **Zusammenfassung**

Vorgeschlagen wird ein Verfahren zur Herstellung von zu Scharnieren zusammensetzbaren Scharnierteilen, deren Vereinzelung durch Abtrennen von einer Profilstange erfolgt. Pro Scharnierteil wird zumindest eine Bohrung für die Scharnierachse (21) sowie eine quer zu der Bohrung bis über die Scharnierachse (21) geführte Einfräsung (7) gefertigt.

Um die Maßhaltigkeit bei der Fertigung von zu Scharnieren zusammensetzbaren Scharnierteilen zu verbessern, wird ein Verfahren mit der folgenden Aufeinanderfolge von Bearbeitungsschritten vorgeschlagen:
a) Versehen der Profilstange (10, 12) mit mindestens einer von der Seite der Profilstange aus bis über die Scharnierachse (21) geführten Einfräsung (7),
b) Versehen des Endes der Profilstange mit einer von deren Stirnfläche (62) ausgehenden, in Profillängsrichtung geführten Bohrung,
c) Abtrennen eines Längsabschnitts von der Länge (L) eines Scharnierteils von dem gefrästen und gebohrten Ende der Profilstange,
d) Weitertransport der Profilstange um die Länge (L) eines Scharnierteils,
e) Wiederholen der Schritte a) bis d).

## Beschreibung

Die Erfindung betrifft ein Verfahren zur Herstellung von zu Scharnieren zusammensetzbaren Scharnierteilen, deren Vereinzelung durch Abtrennen von einer Profilstange erfolgt, wobei pro Scharnierteil zumindest eine Bohrung für die Scharnierachse sowie eine quer zu der Bohrung bis über die Scharnierachse geführte Einfräsung gefertigt wird.

Zur Herstellung von Scharnierteilen, welche bei der späteren Montage dann zu Scharnieren zusammengesetzt werden, wird als Ausgangsmaterial häufig auf gewalzte Profilstangen zurückgegriffen. Die Profilstangen werden durch Zersägen zunächst in eine Vielzahl einzelner Längsabschnitte zerlegt, deren Maße im Wesentlichen den späteren Endmaßen der Scharnierteile entsprechen. Die so entstandenen Abschnitte werden dann grob entgratet, einzeln in die Werkstückaufnahme einer Bohreinrichtung eingespannt und mit der Bohrung für den Scharnierbolzen versehen. Anschließend werden die Werkstücke der Werkstückaufnahme wieder entnommen und in die Werkstückaufnahme einer Fräsmaschine eingespannt, im der sie mit bis über die Scharnierachse reichenden Einfräsungen versehen werden. Die Fräsmaschine arbeitet mit einer Vorschubrichtung quer zur Vorschubrichtung der Bohreinrichtung. Schließlich durchlaufen die Werkstücke noch weitere Bearbeitungsstationen, etwa zur Einbringung von Bohrungen, die bei dem späteren Einsatz des Scharniers als Anschraublöcher dienen.

Im Laufe der Durchführung der einzelnen Bearbeitungsschritte kann es zu einer Aufsummierung der Fertigungstoleranzen mit dem Ergebnis kommen, dass die so produzierten Scharnierteile deutliche Schwankungen in der Maßhaltigkeit zeigen. Diese Schwankungen ließen sich zwar durch den Einsatz präziserer Bearbeitungs- und Spanneinrichtungen teilweise reduzieren, jedoch sind hochpräzise arbeitende Werkzeuge und Spannvorrichtungen teuer und erhöhen daher die Kosten des Prozesses.

Ziel der Erfindung ist es daher, bei der Herstellung von zu Scharnieren zusammensetzbaren Scharnierteilen auch ohne den Einsatz präziserer Bearbeitungs- und Spanneinrichtungen zu geringeren Schwankungen in der Maßhaltigkeit der Scharnierteile zu gelangen.

Zur **Lösung** wird ein Verfahren der eingangs angegebenen Art vorgeschlagen, das gekennzeichnet ist durch die Aufeinanderfolge der Schritte
a) Versehen der Profilstange mit mindestens einer von der Seite der Profilstange aus bis über die Scharnierachse geführten Einfräsung,
b) Versehen des Endes der Profilstange mit einer von deren Stirnfläche ausgehenden, in Profillängsrichtung geführten Bohrung,
c) Abtrennen eines Längsabschnitts von der Länge eines Scharnierteils von dem gefrästen und gebohrten Ende der Profilstange,
d) Weitertransport der Profilstange um die Länge eines Scharnierteils,
e) Wiederholen der Schritte a) bis d).

Bei diesem Verfahren erfolgen zumindest die wichtigen Bearbeitungsschritte des Herstellens der Einfräsungen sowie des Herstellens der Bohrung für den Scharnierbolzen unmittelbar an der noch nicht in einzelne Abschnitte zerlegten Profilstange, und damit in einer gemeinsamen Einspannung. Dies führt zu einer guten und insbesondere reproduzierbaren Maßhaltigkeit der Bearbeitungsschritte mit der Folge geringer Maßschwankungen bei den fertig produzierten Scharnieren. Dies gelingt auch ohne den Einsatz von präziseren und damit teureren Bearbeitungs- und Spannwerkzeugen.

Mit einer Ausgestaltung des Verfahrens wird vorgeschlagen, dass die Profilstange während des Abtrennens durch zumindest eine beweglich gestaltete Haltebacke fixiert wird, welche die Profilstange in dem zwischen der Bohrung und dem beim Abtrennen entstehenden Trennschnitt aufgespannten Rechteckwinkel beaufschlagt. Vorzugsweise wird die bewegliche Haltebacke zum Fixieren des Endes der Profilstange gegen eine starr angeordnete Gegenbacke verfahren. In konstruktiv einfacher Weise kann die Gegenbacke durch einen Endabschnitt einer sich längs der Profilstange erstreckenden Profilstangenführung gebildet sein.

Mit einer weiteren Ausgestaltung des Verfahrens wird vorgeschlagen, dass der abgetrennte Längsabschnitt quer zu der Bohrung aus dem Arbeitsbereich des Bohrwerkzeuges abgeführt wird. Dies kann auf besonders einfache und zuverlässige Weise erreicht werden, indem die Abführung des abgetrennten Längsabschnitts unter Schwerkrafteinfluss über eine Rutsche oder Rampe erfolgt. Der abgetrennte und abgeführte Längsabschnitt kann dann zur weiteren Bearbeitung zum Beispiel in eine Entgratungseinrichtung gelangen.

Anstelle der Rampe oder Rutsche ist auch, wenngleich mit deutlich höherem Aufwand, ein Roboter einsetzbar, der als Handhabungsroboter die vereinzelten Längsabschnitte gezielt zum nächsten Fertigungsschritt transportiert, oder als Fertigungsroboter diesen Schritt selbst ausführt. Solche Schritte können zum Beispiel das Entgraten der stirnseitigen Bohrung sein, oder das Schleifen des beim Sägen verbleibenden Sägegrats.

Mit einer weiteren Ausgestaltung des Verfahrens wird vorgeschlagen, dass der Längsabschnitt, bevor er mit der in Profillängsrichtung geführten Bohrung versehen und abgetrennt wird, mit mindestens einem Anschraubloch versehen wird. Weiterhin oder alternativ lassen sich, je nach Bauart des Scharniers, auch Gewinde, Versenke, Flachsenke oder das Produkt kennzeichnende Prägungen unmittelbar an der Profilstange fertigen.

Das erfindungsgemäße Verfahren wird im Folgenden anhand von Ausführungsbeispielen und unter Bezugnahme auf die Zeichnungen näher erläutert. Darin zeigen:
- Fig. 1a: in einer Draufsicht ein aus zwei Scharnierpartnern bzw. Scharnierhälften zusammengesetztes Scharnier;
- Fig. 1b: das Scharnier in einer stirnseitigen Ansicht;
- Fig. 2: eine schematische Übersichtsdarstellung zum Zusammenfügen und Vorbereiten von Profilstangen zu einem Profilstrang, aus dem einzelne Scharnierteile gefertigt werden;
- Fig. 3: eine stark vereinfachte Darstellung zu den Bearbeitungs- und Spannschritten im Fertigungsbereich am Ende des Profilstrangs;
- Fig. 4: eine perspektivische Ansicht des Fertigungsbereichs und der dort angeordneten Bearbeitungs- und Spannwerkzeuge;
- Fig. 5: eine Draufsicht auf den Fertigungsbereich und
- Fig. 6: eine Seitenansicht auf den Fertigungsbereich.

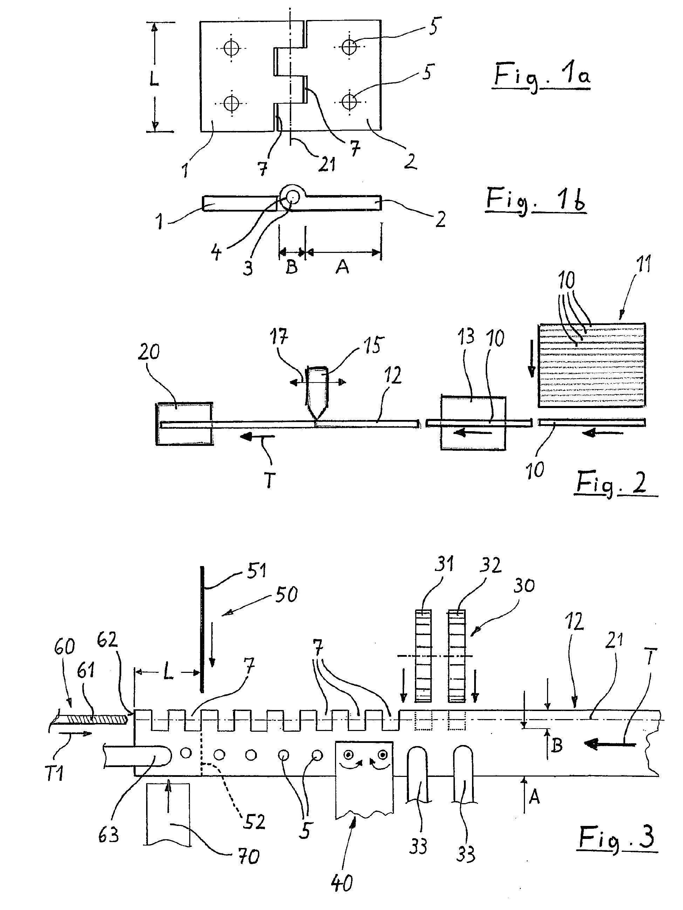

Das in den Fign. 1 und 2 dargestellte Scharnier setzt sich aus zwei Scharnierhälften bzw. Scharnierpartnern 1, 2 zusammen. Bei dem dargestellten Beispiel sind die Scharnierpartner identisch gestaltet, jedoch ist auch eine abweichende Gestaltung möglich. Hergestellt sind die Scharnierpartner 1, 2 aus Profilstangen, deren Querschnitt sich aus einem flachen Profilabschnitt A sowie einem verdickten, in etwa kreisförmigen Profilabschnitt B zusammensetzt, wie dies in Fig. 1b anhand der Stirnansicht des Scharnierteils 2 erkennbar ist. Der im Vergleich zum Profilabschnitt A wulstförmig erweiterte Profilabschnitt B nimmt beim fertigen Scharnier die durch beide Scharnierhälften 1, 2 hindurchgehende Bohrung 4 mit dem Scharnierbolzen 3 auf. Das fertige Scharnier besteht also aus insgesamt drei Einzelteilen, nämlich dem ersten Scharnierteil 1, dem zweiten Scharnierteil 2 sowie dem Scharnierbolzen 3.

Fig. 1a lässt erkennen, dass die beiden Scharnierteile 1, 2 im Bereich des Profilabschnitts B mit rechteckigen Einfräsungen 7 versehen sind. Bei dem dargestellten Scharnier weist jedes Scharnierteil zwei derartige Einfräsungen 7 auf, jedoch ist auch eine andere Anzahl möglich, die zudem bei den Scharnierpartnern unterschiedlich sein kann. Jede Einfräsung 7 reicht bis über die Scharnierachse 21 und sie ist, in Scharnierlängsrichtung betrachtet, von solcher Länge, dass der am jeweils anderen Scharnierpartner ausgebildete, nicht eingefräste Längsbereich in die Einfräsung 7 hineinpasst. Auf diese Weise greifen die verdickten Profilabschnitte B der Scharnierteile 1, 2 längs der Scharnierachse 21 kamm- oder zahnartig ineinander.

Ferner sind beide Scharnierteile mit Anschraublöchern 5 für die spätere Befestigung der Scharnierteile versehen.

Die Fig. 2 zeigt das Zusammenstellen einzelner Profilstangen 10 zu einem Profilstrang 12, aus dem die Scharnierteile gefertigt werden. In einem Profillager 11 befinden sich die angelieferten Profilstangen 10 von handelsüblicher Länge. Diese richtet sich in der Regel nach den zur Verfügung stehenden Transportmöglichkeiten z. B. auf einem Lkw. Jede einzelne Profilstange 10 durchläuft eine Durchlauf-Strahlanlage 13, in welcher Oberflächenverunreinigungen entfernt werden, und gelangt dann zu einer Schweißeinheit 15. In der Schweißeinheit 15 werden die noch einzelnen Profilstangen 10 zu einem Profilstrang 12 zusammengefügt und verbunden. Die Schweißwerkzeuge der Schweißeinheit 15 können längsbeweglich sein, wie in Fig. 2 durch den Pfeil 17 angedeutet, um so das Anschweißen einer weiteren Profilstange 10 auch während des sich schrittweise vorwärts bewegendem Profilstrangs 12 zu ermöglichen. Die getaktete, schrittweise Vorschubbewegung des Profilstrangs 12 ist für dessen spätere Bearbeitung sowie Vereinzelung in einem Fertigungsbereich 20 erforderlich. Einzelheiten der Bearbeitungsstationen in dem Fertigungsbereich 20 werden nachfolgend anhand der Figuren 3 bis 6 erläutert.

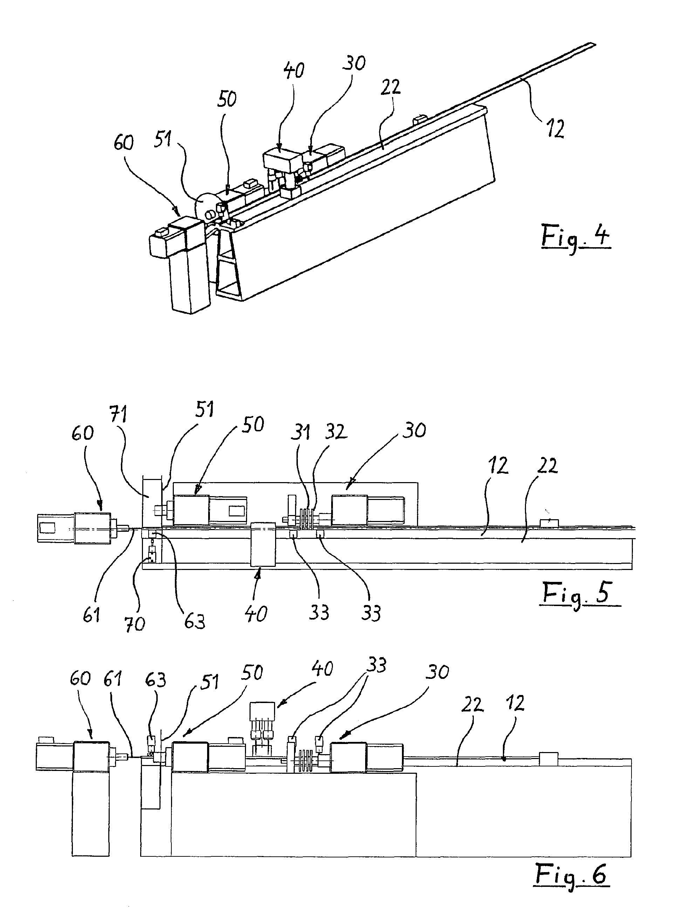

Fig. 3 zeigt in einer Prinzipdarstellung die verschiedenen Bearbeitungsstationen im Fertigungsbereich 20, d. h. am bearbeitungsseitigen Ende der miteinander verschweißten Profilstangen. Der Querschnitt jeder Profilstange 10 setzt sich, wie bereits beschrieben, aus dem flachen Profilabschnitt A sowie dem wulstartig verdickten Profilabschnitt B zusammen, von dem in Fig. 3 strichpunktiert die spätere Scharnierachse 21 eingetragen ist. Über die Länge des Fertigungsbereichs 20 liegt die Profilstange auf einer sich längs der Profilstange erstreckenden Profilstangenführung 22 (Fig. 4) auf, so dass für die Bearbeitungsschritte eine sichere und präzise Unterstützung der Profilstange gewährleistet ist. Spannwerkzeuge fixieren den Profilstrang 12 auf der Führung für die Dauer der Bearbeitung.

Zunächst durchläuft der in Transportrichtung T Schritt für Schritt vorwärts bewegte Profilstrang 12 eine Fräseinheit 30. In der Fräseinheit wird die Profilstange mit mindestens einer von der Seite der Profilstange aus bis über die Scharnierachse 21 geführten Einfräsung 7 versehen, die am fertigen Produkt das sogenannte Gewerbe bildet. Zu diesem Zweck ist die Fräseinheit mit einer entsprechenden Anzahl an Fräswerkzeugen 31, 32 versehen. Diese können auch unterschiedlich oder auswechselbar sein, um so mittels ein- und derselben Fräseinheit unterschiedlich große, unterschiedlich angeordnete oder hinsichtlich ihrer Anzahl unterschiedliche Einfräsungen 7 herstellen zu können. Auf diese Weise sind in ein- und demselben Fertigungsbereich 20 entsprechend der jeweils geforderten Spezifikation unterschiedliche Scharnierteile oder Scharnierteile mit unterschiedlich gestalteten Gewerben herstellbar.

Bestandteil der Fräseinheit 30 oder dieser nachgeordnet kann eine Station sein, in welcher die Fräsgrate entfernt werden, etwa durch den Einsatz entsprechende Schleifwerkzeuge.

Für die Dauer der Bearbeitung und gegebenenfalls Nachbearbeitung in der Fräseinheit 30 steht der Profilstrang 12 still. Bewegliche Haltebacken 33 eines Spannwerkzeugs werden für die Dauer der Fräsbearbeitung auf die Profilstange abgesenkt um diese ausreichend zu fixieren, wobei als Gegenbacke die sich unter dem Profilstrang erstreckende Profilstangenführung dient.

Der Fräseinheit mit den Fräswerkzeugen 31, 32 in Transportrichtung T nachgeordnet ist eine erste Bohreinheit 40. Mittels der Bohreinheit 40 werden die späteren Anschraublöcher 5 gebohrt, und diese zusätzlich mit einer Einsenkung versehen. Zum Beispiel erfolgt in der Bohreinheit 40 in einem ersten Takt die Fertigung von zwei Anschraublöchern 5, und im darauf folgenden Takt die Fertigung der entsprechenden Ansenklöcher.

In Transportrichtung ist der Fräseinheit 30 und der Bohreinheit 40 eine Trenneinheit 50 nachgeordnet. In der Trenneinheit 50 wird ein Profillängsabschnitt, welcher die Länge L eines Scharnierteils 1, 2 aufweist, von dem Ende des Profilstrangs 12 abgetrennt. Das Werkzeug der Trenneinheit 50 ist hier eine Säge 51, welche den Profilstrang quer zu seiner Längserstreckung durchtrennt. Die Lage des Trennschnitts 52 ist in Fig. 3 eingezeichnet.

Schließlich ist eine Längsbohreinheit 60 mit einem Bohrwerkzeug 61 vorhanden. Dieses arbeitet mit Vorschub in Längsrichtung des Profilstrangs, um das Ende des Profilstrangs mit einer von dessen Stirnfläche 62 ausgehenden und in Profillängsrichtung geführten Bohrung zu versehen, welche Bohrung 4 (Fig. 1b) später den Scharnierbolzen 3 aufnimmt. Die Vorschubrichtung T1 des Bohrwerkzeuges 61 ist entgegengesetzt zu der Transportrichtung T des Profilstrangs. Während des Trennschnitts 52 sowie während des Versehens des Profilstrangs mit der Längsbohrung 4 wird das Ende des Profilstrangs 12 durch mindestens eine quer zu dem Profilstrang beweglich gestaltete Spann- und Haltebacke 63 fixiert. Der Ort der Klemmung der Spannbacke 63 befindet sich in jenem Rechteckwinkel, welcher zwischen dem Trennschnitt 52 und der durch den Vorschub des Bohrwerkzeugs 61 erzeugten Längsbohrung 4 (Fig. 1 b) aufgespannt ist.

Der Vorschub des Profilstrangs 12 in Transportrichtung T erfolgt taktweise in Schritten, deren Länge gleich ist der Länge L des Scharnierteils 1, 2 in Längsrichtung der Scharnierachse 21.

In jedem Fertigungstakt wird der Profilstrang 12, nachdem dieser zum Stillstand gekommen ist, zunächst mittels der Spannwerkzeuge ausreichend gegenüber der Profilstangenführung fixiert. Hierzu werden die Haltebacken 33, 63 unter Klemmung des Profilstrangs abgesenkt. Sodann erfolgen gleichzeitig die einzelnen Bearbeitungsschritte, d. h. auf einem Längsabschnitt des Strangs werden die Einfräsungen 7 hergestellt, auf einem anderen Längsabschnitt werden die Anschraublöcher 5 hergestellt, auf einem anderen Längsabschnitt werden die Einsenkungen der Bohrlöcher hergestellt. Gleichzeitig wird ausgehend von der Stirnfläche 62 des Profilstrangs die Längsbohrung 4 hergestellt. Der Vorschub des Bohrers hierfür ist wegen der Einfräsung 7 gering, und insbesondere geringer als die Länge 2 des anschließend abgetrennten Längsabschnitts.

Unmittelbar nachdem die Längsbohrung 4 hergestellt ist und der Bohrer 61 wieder seine in Fig. 3 dargestellte, zurückgezogene Position eingenommen hat, erfolgt mittels der Trenneinheit 50 der Trennschnitt 52. Schließlich wird der durch den Trennschnitt abgetrennte, äußerste Längsabschnitt der Länge L mittels eines Schiebers 70 quer zu der Bohrung 4 aus dem Arbeitsbereich des Bohrwerkzeuges 61 abgeführt.

In den Figuren 4 bis 6 ist der Fertigungsbereich 20 detaillierter dargestellt, wobei gleiche Elemente mit denselben Bezugszeichen wie in Fig. 3 bezeichnet sind. Ferner dargestellt ist eine Rutsche oder Rampe 71, über die die abgetrennten Endabschnitte abgeführt werden, etwa zu einer nachgeordneten Entgratungseinrichtung.

### Bezugszeichenliste

- 1: Scharnierteil, Scharnierhälfte
- 2: Scharnierteil, Scharnierhälfte
- 3: Scharnierbolzen
- 4: Bohrung
- 5: Anschraubloch
- 7: Einfräsung
- 10: Profilstange
- 11: Profillager
- 12: Profilstrang
- 13: Durchlaufstrahlanlage
- 15: Schweißeinheit
- 17: Längsbeweglichkeit
- 20: Fertigungsbereich
- 21: Lage der Scharnierachse
- 22: Profilstangenführung
- 30: Fräseinheit
- 31: Fräswerkzeug
- 32: Fräswerkzeug
- 33: Haltebacke
- 40: Bohreinheit
- 50: Trenneinheit
- 51: Trennwerkzeug, Säge
- 52: Trennschnitt
- 60: Längsbohreinheit
- 61: Bohrwerkzeug
- 62: Stirnfläche
- 63: Haltebacke
- 70: Schieber
- 71: Rutsche
- A: flacher Profilabschnitt
- B: verdickter Profilabschnitt
- L: Länge
- T: Transportrichtung
- T1: Vorschubrichtung

## Patentansprüche

1. Verfahren zur Herstellung von zu Scharnieren zusammensetzbaren Scharnierteilen, deren Vereinzelung durch Abtrennen von einer Profilstange erfolgt, wobei pro Scharnierteil zumindest eine Bohrung für die Scharnierachse sowie eine quer zu der Bohrung bis über die Scharnierachse geführte Einfräsung gefertigt wird, **gekennzeichnet durch** die Aufeinanderfolge der Schritte
a) Versehen der Profilstange (10, 12) mit mindestens einer von der Seite der Profilstange aus bis über die Scharnierachse (21) geführten Einfräsung (7),
b) Versehen des Endes der Profilstange (10, 12) mit einer von deren Stirnfläche (62) ausgehenden, in Profillängsrichtung geführten Bohrung (4),
c) Abtrennen eines Längsabschnitts von der Länge (L) eines Scharnierteils von dem gefrästen und gebohrten Ende der Profilstange,
d) Weitertransport der Profilstange (10, 12) um die Länge (L) eines Scharnierteils,
e) Wiederholen der Schritte a) bis d).

2. Verfahren nach Anspruch 1, **dadurch gekennzeichnet, dass** die Profilstange (10, 12) während des Abtrennens durch zumindest eine beweglich gestaltete Haltebacke (63) fixiert wird, wobei die Haltebacke (63) die Profilstange in dem zwischen der Bohrung (4) und dem beim Abtrennen entstehenden Trennschnitt (52) aufgespannten Rechteckwinkel beaufschlagt.

3. Verfahren nach Anspruch 2, **dadurch gekennzeichnet, dass** die bewegliche Haltebacke (63) zum Fixieren der Profilstange gegen eine starr angeordnete Gegenbacke verfahren wird.

4. Verfahren nach Anspruch 3, **dadurch gekennzeichnet, dass** die Gegenbacke durch einen Endabschnitt einer sich längs der Profilstange (10, 12) erstreckenden Profilstangenführung (22) gebildet wird.

5. Verfahren nach einem der Ansprüche 1 bis 4, **dadurch gekennzeichnet, dass** der Längsvorschub der in Profillängsrichtung geführten Bohrung (4) geringer ist als die Länge (L) des abgetrennten Längsabschnitts.

6. Verfahren nach einem der Ansprüche 1 bis 5, **dadurch gekennzeichnet, dass** der abgetrennte Längsabschnitt quer zu der Bohrung (4) aus dem Arbeitsbereich des Bohrwerkzeuges (61) abgeführt wird.

7. Verfahren nach Anspruch 5 oder 6, **dadurch gekennzeichnet, dass** der abgetrennte Längsabschnitts unter Schwerkrafteinfluss über eine Rutsche oder Rampe (71) abgeführt wird.

8. Verfahren nach Anspruch 5, 6 oder 7, **dadurch gekennzeichnet, dass** der abgetrennte und abgeführte Längsabschnitt zu einer Entgratungseinrichtung gelangt.

9. Verfahren nach einem der vorangehenden Ansprüche, **dadurch gekennzeichnet, dass** der Längsabschnitt, bevor er mit der in Profillängsrichtung geführten Bohrung (4) versehen und abgetrennt wird, mit mindestens einem Anschraubloch (5) versehen wird.
